(19) Europäisches Patentamt
European Patent Office
Office européen des brevets

(11) Veröffentlichungsnummer: **0 166 683**
**A2**

(12) # EUROPÄISCHE PATENTANMELDUNG

(21) Anmeldenummer: **85810234.6**

(22) Anmeldetag: **15.05.85**

(51) Int. Cl.⁴: **C 07 F 7/18**, A 01 N 55/00

(30) Priorität: **25.05.84 CH 2572/84**
**29.04.85 CH 1813/85**

(43) Veröffentlichungstag der Anmeldung: **02.01.86**
**Patentblatt 86/1**

(84) Benannte Vertragsstaaten: **AT BE CH DE FR GB IT LI NL**

(71) Anmelder: **CIBA-GEIGY AG, Klybeckstrasse 141,**
**CH-4002 Basel (CH)**

(72) Erfinder: **Schlosser, Manfred, Prof. Dr., Avenue Parc-Rouvraie 24, CH-1018 Lausanne (CH)**
Erfinder: **Brassel, Jakob, Dr., Stelmertenmattweg 1, CH-4411 Lupsingen (CH)**

(54) **Schädlingsbekämpfungsmittel.**

(57) Verwendung von trans, trans-8,10-Dodecadien-1-yloxysilanen der Formel I

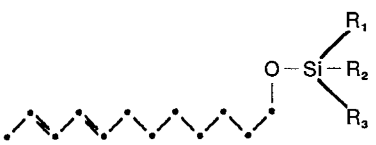

(I)

worin $R_1$ und $R_2$ unabhängig voneinander einen $C_1$-$C_6$-Alkylrest und $R_3$ einen $C_1$-$C_6$-Alkylrest oder den Phenylrest bedeuten, als Sexual-Lockstoff zur Bekämpfung oder zur Überwachung und Früherkennung von Cydia pomonella; diese Verbindungen enthaltenden Mittel und Anwendungsformen; sowie neue Verbindungen der Formel I, worin $R_1$ und $R_2$ einen $C_1$-$C_6$-Alkylrest; und $R_3$ einen $C_2$-$C_6$-Alkylrest oder den Phenylrest bedeuten, sowie deren Herstellung.

EP 0 166 683 A2

CIBA-GEIGY AG
Basel (Schweiz)

5-14889/1+2/ICO

Schädlingsbekämpfungsmittel

Die vorliegende Erfindung betrifft die Verwendung von trans, trans-8,10-Dodecadien-1-yloxysilanen zur Bekämpfung von Cydia pomonella (Laspeyresia pomonella) sowie neue, zu dieser Gruppe gehörende Verbindungen.

Cydia pomonella gilt als einer der hauptsächlichen Schädlinge in Apfelkulturen. Zur Bekämpfung von Cydia pomonella sowie zur Ueberwachung und Früherkennung eines etwaigen Befalls durch diesen Schädling ("monitoring") ist die Anwendung von Insekten-Lockstoffen (Sexual-Pheromonen) zweckmässig. Derartige Signal-Substanzen wirken schon in ausserordentlich geringen Konzentrationen und verändern das Verhalten der Insekten in einer ihre Bekämpfung ermöglichenden Weise. Dank des Einsatzes von Insekten-Lockstoffen kann die Behandlung der zu schützenden Kulturflächen mit Insektiziden, die für Warmblüter und Nützlinge oftmals toxisch sind, vermieden oder zumindest erheblich eingeschränkt werden. Diese auch vom ökologischen Standpunkt aus vorteilhaften Arbeitsverfahren haben in Konzepten, die auf dem integrierenden Pflanzenschutz beruhen, bereits starke Beachtung gefunden.

Es ist aus Science, 174 297 (1971) bekannt, den natürlichen Sexual-Lockstoff von Cydia pomonella, d.h. das trans, trans-8,10-Dodecadien-1-ol, zur Bekämpfung dieses Apfel-Schädlings zu verwenden. Weiterhin ist es aus Tetrahedron Letters 30, 2999-3002 (1972) bekannt, dass man zu dem genannten Dodecadienol gelangen kann durch

Hydrolyse des trans, trans-8, 10-Dodecadien-1-yloxy-trimethylsilans, das dort jedoch nicht als Insekten-Lockstoff oder zur Schädlingsbekämpfung geeignet beschrieben wird. Ueberraschenderweise wurde nun gemäss vorliegender Erfindung festgestellt, dass die 8,10-Dodecadienyloxysilane selbst ausgezeichnet als Lockstoffe zur Bekämpfung von Cydia pomonella verwendet werden können. Diese Verbindungen sind vorteilhafterweise untoxisch und besitzen lang anhaltende Attraktionswirkung.

Demgemäss schlägt die vorliegende Erfindung die Verwendung von trans, trans-8,10-Dodecadien-1-yloxysilanen der Formel I

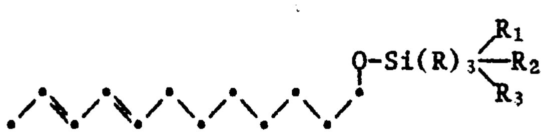 (I),

worin $R_1$ und $R_2$ unabhängig voneinander einen $C_1$-$C_6$-Alkylrest; und $R_3$ einen $C_1$-$C_6$-Alkylrest oder den Phenylrest bedeuten, als Sexual-Lockstoffe zur Bekämpfung von Cydia pomonella vor.

Bevorzugt verwendet werden erfindungsgemäss Verbindungen der Formel I, worin $R_1$ und $R_2$ unabhängig voneinander einen $C_1$-$C_4$-Alkylrest und $R_3$ einen $C_1$-$C_4$-Alkylrest oder den Phenylrest bedeuten. Besonders vorteilhaft ist die Verwendung solcher Verbindungen der Formel I, worin $R_1$, $R_2$ und $R_3$ einen $C_1$-$C_4$-Alkylrest bedeuten, und solcher, worin $R_1$ und $R_2$ unabhängig voneinander Methyl, Aethyl, n-Propyl oder n-Butyl und $R_3$ Methyl, Aethyl, n-Propyl, n-Butyl oder Phenyl bedeuten. Wegen ihrer hohen Wirksamkeit ist auch die Verwendung von Verbindungen der Formel I, worin $R_1$, $R_2$ und $R_3$ Methyl oder Aethyl bedeuten, hervorzuheben.

Die Erfindung schlägt weiterhin neuartige trans,trans-8,10-Dodecadien-1-yloxysilane der Formel I vor, worin
$R_1$ und $R_2$ unabhängig voneinander einen $C_1$-$C_6$-Alkylrest; und
$R_3$ einen $C_2$-$C_6$-Alkylrest oder den Phenylrest bedeuten.

Besonders hervorzuheben sind solche neuen Verbindungen der Formel I, worin
$R_1$ und $R_2$ unabhängig voneinander einen $C_1$-$C_4$-Alkylrest; und
$R_3$ einen $C_2$-$C_4$-Alkylrest oder den Phenylrest bedeuten, und solche, worin $R_1$, $R_2$ und $R_3$ einen $C_2$-$C_4$-Alkylrest bedeuten. Wegen ihrer Wirkung speziell hervorzuheben sind die neuen Verbindungen der Formel I, worin $R_1$ und $R_2$ Methyl, Aethyl, n-Propyl oder n-Butyl; und $R_3$ Aethyl, n-Propyl, n-Butyl oder Phenyl bedeuten.

Die Erfindung schlägt ferner Mittel zur Bekämpfung von Cydia pomonella vor, die eine Verbindung der Formel I zusammen mit geeigneten Trägern, Lösungsmitteln, Verdünnungsmitteln, und/oder Formulierungshilfsmittel enthalten. Die den Sexual-Lockstoff der Formel I enthaltenden Mittel können auch in Form von kautschukelastischen oder gummiartigen festen Massen, gegebenenfalls in Gestalt von Dispensern, z.B. zylindrisch oder kegelartig geformten Kautschuk- oder Gummi-Formkörpern, vorliegen. Die erfindungsgemässen Mittel lassen sich ferner als sprüh- oder streichfähige, flüssige oder fliessfähige sowie an Unterlagen, auf die sie aufgebracht werden, haftende Zubereitungen formulieren, die sich gegebenenfalls verfestigen können, z.B. unter Aushärtung oder Filmbildung, wobei der sich bildende Film auch elastische Merkmale aufweisen kann.

Zweckmässigerweise enthalten die erfindungsgemässen Mittel bzw. Zubereitungen Substanzen und Formulierungshilfsmittel, die den Wirkstoff der Formel I gegen die Einwirkung von Witterungseinflüssen, UV-Strahlen und Luftoxydation schützen, wie z.B. Alterungsschutzmittel, UV-Absorber, Antioxydantien usw. In den Mitteln können auch Haft-, Klebe- oder Verdickungsmittel, z.B. auf der Basis geeigneter Polymerisate oder Mischpolymerisate, enthalten sein, um die Mittel bestimmten vorgegebenen Bedingungen und Anforderungen anzupassen.

Es wurde gefunden, dass die Dauer der Attraktionswirkung auf Cydia pomonella von der Art der Substituenten $R_1$, $R_2$ und $R_3$ in den Verbindungen der Formel I abhängt. Wenn z.B. eine besonders lange Wirkungsdauer erwünscht ist, wählt man zweckmässigerweise solche Verbindungen der Formel I, die langkettige Alkylsubstituenten aufweisen. Demgegenüber besitzen Verbindungen mit kurzkettigen Alkylsubstituenten eine kürzere Wirkungsdauer. Durch Gemische unterschiedlich substituierter Verbindungen der Formel I z.B. kann die Wirkungsdauer weiterhin den jeweiligen Erfordernissen der Praxis angepasst werden. Die Wirkungsdauer kann zahlenmässig durch die sogenannte "Halbwertszeit" ausgedrückt werden. Das ist die Zeit, nach der von der eingesetzten Gew.-Menge des Wirkstoffes nur noch die Hälfte vorhanden ist.

Es sind bereits verschiedene Systeme und praktische Anwendungsmöglichkeiten für Insekten-Lockstoffe vorgeschlagen worden. Diese sind auch für die erfindungsgemäss zur biologischen Bekämpfung von Cydia pomonella vorgeschlagenen Sexual-Lockstoffe der Formel I geeignet und können ebenfalls zur Ueberwachung von Apfelkulturen und zur Früherkennung eines etwaigen Schädlingsbefalls dienen. Man kann die Verbindungen der Formel I und diese enthaltenden Zubereitungsformen einsetzen, um die Schadinsekten durch die sogenannte Konfusionsmethode ("disrupting"-Effekt) zu bekämpfen. Bei dieser Methode bewirkt der in einer Apfelkultur ausgebrachte Lockstoff der Formel I, dass die männlichen Falter das weibliche Pheromonsignal, bzw. das Weibchen selbst, nicht mehr aufzufinden vermögen. Durch diese mit einer Desorientierung der Tiere verbundenen Effekte werden ihre Kopulationen so weitgehend verhindert bzw. gestört, dass praktisch keine Nachkommen entstehen und sich nur geringe Schädlingspopulationen entwickeln. Damit tritt dann eine drastische Reduzierung des Schädlingsbefalls ein. Der Lockstoff der Formel I kann auch eingesetzt werden, um die Falter anzulocken und sie dann durch Fallen bzw. Fangvorrichtungen und/oder Insektizide, Chemosterilantien usw. unschädlich zu machen. In diesem Sinne kann man die erfindungsgemässen, den Lockstoff der Formel I enthaltenden Mittel auch zusammen

mit bekannten Insektiziden anwenden oder Insektizide in die Mittel einbringen. Im allgemeinen wird der Lockstoff der Formel I in einer Menge von etwa 5 bis 100, vorzugsweise 10 bis 50 g, beispielsweise 20 bis 40 g, pro Hektar Kulturfläche eingesetzt.

Gewöhnlich werden die Lockstoffe der Formel I in der Weise eingesetzt, dass man sie in Form von Zubereitungen oder Anordnungen verwendet, die eine verzögerte Freisetzung ("slow release") dieser Wirkstoffe sicherstellen. Die Zeit, während der die Wirkstoffe auf diese Weise verzögert freigesetzt werden, kann z.B. bis zu etwa 12 Wochen betragen. Für diesen Zweck ist es bekannt, diese Lockstoffe in geeignete Polymerisate oder Mischpolymerisate einzubringen, wobei insbesondere die Mikroeinkapselung zu erwähnen ist, die Lockstoffe in mehrschichtige polymere Blattmaterialien zu inkorporieren oder sie in viskosen Polymer-Formulierungen zu lösen oder zu dispergieren. Eine gewisse Bedeutung besitzen auch die Methoden, bei denen mit dem Lockstoff befüllte Dispenser, vorzugsweise in Form von Kunststoff-Hohlfasern oder -Kapillaren, benutzt werden, um die Wirkstoffe über längere Zeiträume in praktisch gleichbleibender Konzentration in die umgebende Atmosphäre abzugeben.

Die im Rahmen der vorliegenden Erfindung vorgeschlagenen Verbindungen der Formel I können in an sich bekannter Weise [vgl. J. Am. Chem. Soc. 74, 1003 (1952)] hergestellt werden durch Umsetzung des eingangs erwähnten trans, trans-8,10-Dodecadien-1-ols mit entsprechenden trisubstituierten Chlorsilanen der Formel II:

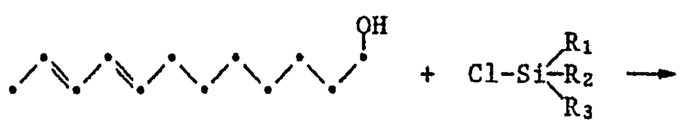

(I) ,

(II)

wobei $R_1$, $R_2$ und $R_3$ die vorstehend angegebenen Bedeutungen haben. Die Ausgangsverbindungen der Formel II sind bekannt oder können analog bekannten Verfahren hergestellt werden.

Die Umsetzung wird bevorzugt unter Normaldruck und in Gegenwart eines basischen Säureacceptors, z.B. eines Amins, wie Triäthylamin, durchgeführt. Man kann die Umsetzung in Gegenwart eines inerten Lösungsmittels, z.B. eines Aethers, wie Diäthyläther, durchführen. Im allgemeinen liegt die Umsetzungstemperatur im Bereich von etwa 0 bis 100°C, vorzugsweise zwischen 10 und 60°C.

Die Alkylgruppen $R_1$, $R_2$ und $R_3$ in den erfindungsgemässen Verbindungen der Formel I können gerad- oder verzweigtkettig sein.

Beispiele für solche Alkyl-Gruppen in der Definition $C_1$-$C_6$-Alkyl gemäss der Erfindung sind z.B. Methyl, Aethyl, n-Propyl, i-Propyl, die vier isomeren Butyl-Gruppen usw. Die Gruppen $R_1$, $R_2$ und $R_3$ können auch unterschiedliche Substituenten bedeuten, so dass das Si-Atom in einer Verbindung der Formel I z.B. mit 2 Methylgruppen und einer t-Butylgruppe oder mit zwei Methylgruppen und einer Phenylgruppe substituiert sein kann.

Beispiel 1: Herstellung von trans, trans-8,10-Dodecadien-1-yloxy-trimethylsilan (Verbindung Nr.1):

Methode A:
Eine Mischung aus trans, trans-8,10-Dodecadien-1-ol (18,2 g) und Natriumamid (4,5 g) in Tetrahydrofuran (100 ml) wird 3 h am Rückfluss erhitzt und dabei kräftig gerührt. Nach Zugabe von Chlor-trimethyl-silan (13,0 g) wird bei 50°C erneut 3 h kräftig gerührt. Man prüft gaschromatographisch, ob die Lösung kein Dodecadienol mehr enthält. Nach Zusatz von Diatomeenerde wird filtriert, eingedampft und destilliert. Im Siedebereich 77 bis 81°C/$3 \cdot 10^{-6}$ mmHg geht die Titelverbindung über.

Methode B:
Eine Mischung aus trans, trans-8,10-Dodecadien-1-ol (18,2 g) Triäthylamin (50 ml) und Chlor-trimethyl-silan (17,5 ml) in Diäthyläther (100 ml) wird 15 h bei 25°C gehalten. Dann wird das Gemisch

filtriert, mit Diäthyläther (100 ml) gewaschen, eingedampft, in Hexan (150 ml) gelöst und mit Eiswasser (3 x 100 ml) geschüttelt. Nach dem Trocknen ($CaSO_4$) wird das Lösungsmittel abgezogen und der Rückstand destilliert (Siedebereich 77 bis 80°C/3·$10^{-6}$ mmHg), wobei die Titelverbindung ($n_D^{20}$= 1,4600) erhalten wird.

Beispiel 2: Herstellung von trans, trans-8,10-Dodecadien-1-yl-oxy-triäthylsilan (Verbindung Nr. 2):

Eine Mischung aus trans, trans-8,10-Dodecadien-1-ol (1,82 g), Triäthylamin (3,5 ml) und Triäthyl-chlor-silan (1,85 ml) wird 15 h bei 25°C gehalten. Nach Verdünnen des Gemisches mit Hexan (100 ml) wird gründlich mit Eiswasser (3 x 50 ml) gewaschen, getrocknet ($CaSO_4$), eingedampft und destilliert. Im Siedebereich von 107 bis 112°C wird die Titelverbindung [$n_D^{20}$ = 1,4697] erhalten.

Entsprechend den vorstehend beschriebenen Arbeitsweisen werden auch die folgenden Verbindungen der Formel I hergestellt:

| Verbindung Nr. | | physikalische Daten |
|---|---|---|
| 3 | 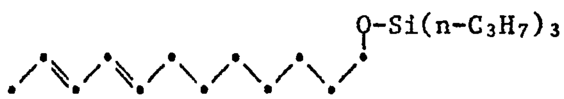 | Sdp.: 118-125°C/ $10^{-5}$ mmHg<br>$n_D^{20}$ = 1,4690 |
| 4 | 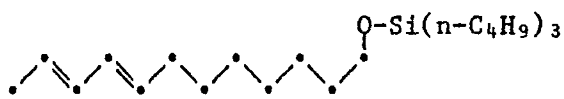 | Sdp.: 135-143°C/ $10^{-5}$ mmHg<br>$n_D^{20}$ = 1,4692 |

5 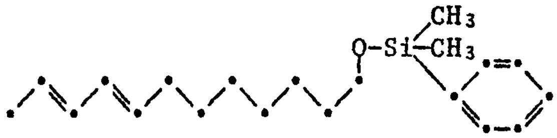

Sdp.: 119-125°C/ $10^{-5}$ mmHg

$n_D^{20}$ = 1,5050

Wie oben angegeben sind ferner folgende Verbindungen der Formel I herstellbar:

Verbindung

Nr.

6 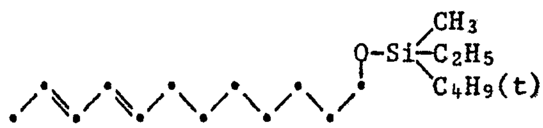

7 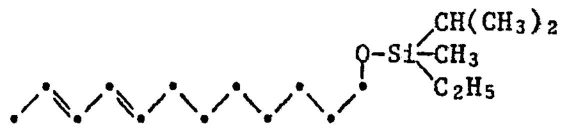

8 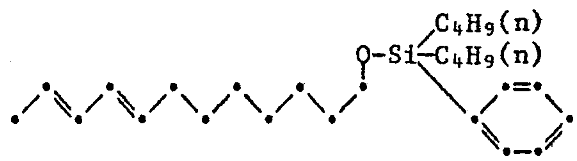

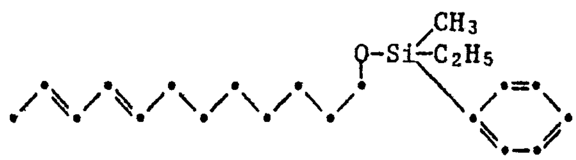

Beispiel 3: Biologischer Feldversuch: Als Versuchsareal wurde eine mit Hochstamm-Apfelbäumen bestandene Anlage von 2 ha benutzt. Ueber dieses Areal verteilt, wurde an 80 Bäumen je eine mit dem Lockstoff trans, trans-8,10-Dodecadien-1-yloxy-trimethylsilan beladene Leimfalle für adulte Männchen von Cydia pomonella angebracht.

Die verwendeten Fallen bestanden aus einem deltaförmigen Hohlkörper aus Papier, der mit einem Schlitz zum Einlass der männlichen Falter und im Inneren mit einer Insektenleim-Beschichtung versehen war, an der die gefangenen Falter festklebten. In der Papierfalle war ein Lockstoff-Dispenser in Form eines Gummistopfens von etwa 1,5 cm Durchmesser, der in der Mitte eine Vertiefung aufwies, angebracht, in welche die jeweils verwendete Menge des Lockstoffes - gelöst in Methylenchlorid - eingebracht worden war. Der Lockstoff wird von dem Gummimaterial vollständig aufgenommen und nach und nach, d.h. verzögert, freigesetzt. So beträgt der Lockstoff-Verlust eines solchen Gummidispensers ausgehend von einer Anfangs-Beladung von 1,0 mg nach 3 Monaten ca. 0,8 mg (Halbwertszeit etwa 2 Monate).

Die Dispenser wurden jeweils mit steigenden Dosierungen des Lockstoffes von 0,01 bis 10,0 mg beschickt. Die Fallen wurden während etwa 2,5 Monaten (2. Juni bis 19. August) in regelmässigen Abständen kontrolliert, um die Anzahl der gefangenen, an den Fallen-Innenwänden haftenden Falter festzustellen. Die erhaltenen Ergebnisse gehen aus der folgenden Tabelle hervor:

Tabelle I

| mg Lockstoff pro Dispenser | Anzahl der gefangenen Falter (Cydia pomonella) | | | | | |
|---|---|---|---|---|---|---|
| | Fallenkontrolle nach | | | | | Total gefangene Falter |
| | 16 Tagen | 32 Tagen | 43 Tagen | 63 Tagen | 78 Tagen | |
| 0,01 | 0 | 1 | 0 | 0 | 0 | 1 |
| 0,1 | 4 | 3 | 4 | 7 | 6 | 24 |
| 1,0 | 13 | 14 | 18 | 14 | 10 | 69 |
| 10,0 | 28 | 23 | 34 | 39 | 24 | 148 |

Beispiel 4: Biologischer Laborversuch im Windkanal:
Pheromon- und Lockstoff-Versuche mit Insekten im Windkanal dienen dazu, auf reproduzierbare Weise das Verhalten bzw. Ansprechen der Testtiere auf die zu prüfenden Substanzen grundsätzlich zahlenmässig festzustellen.

Der verwendete Windtunnel, wie er im Prinzip bereits in der Literatur beschrieben wurde (vgl. J.R. Hiller und W.L. Roelofs, J. Chem. Ecology, 4, 187-198, 1978) besteht im wesentlichen aus einem geschlossenen Kanal aus durchsichtigem Material mit rechteckigem Querschnitt. An einer Endseite des Kanals befindet sich eine Düse mit einem Lockstoff-Dispenser, wie er im vorstehenden Beispiel 3 beschrieben worden ist. An der entgegengesetzten Endseite des Kanals sind eine kurze, offene Glasröhre zur Aufnahme der Insekten sowie ein Abflug-Tisch angeordnet. Eine vorhandene Lockwirkung des in dem Dispenser enthaltenen Lockstoffes, der mit dem durch die Düse geführten Luftstrom auf das Insekt in der Glasröhre trifft, verursacht bei dem adulte Männchen von Cydia pomonella einen Erregungszustand, der sich zunächst in Motorik und Schwirren mit den Flügeln äussert. Die Lockstoffquelle (d.h. der Dispenser mit der Wirksubstanz) wird dann von dem Abflug-Tisch aus gezielt angeflogen. Bei Substanzen ohne Lockwirkung bleibt der Falter regungslos in der offenen Glasröhre sitzen. Für jeden Flugversuch wird die Glasröhre mit jeweils einem Falter besetzt. Für jede zu prüfende Verbindung werden im Durchschnitt 30 Flugversuche in 10 Wiederholungen zu 3 Faltern durchgeführt. Die erhaltenen Ergebnisse gegenüber Kontrollansätzen ohne Lockstoff gehen aus der folgenden Tabelle II hervor:

Tabelle II

| Test-Verbindung Nr. | Menge der Testverbindung auf Dispenser | % Testtiere mit gezieltem Anflug auf Dispenser | % Testtiere mit Motorik und Flügelschwirren |
|---|---|---|---|
| 1 | 100 µg | 43 | 99 |
| 1 | 300 µg | 29 | 96 |
| 2 | 300 µg | 44 | 78 |
| 3 | 300 µg | 0 | 67 |
| 4 | 300 µg | 0 | 50 |
| 4 | 3000 µg | 29 | 57 |
| 5 | 300 µg | 40 | 70 |

Patentansprüche

1. Verwendung eines trans, trans-8,10-Dodecadien-1-yloxysilans der Formel I

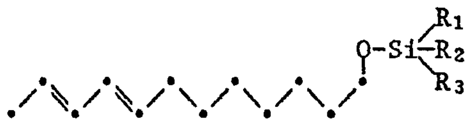

(I) ,

worin $R_1$ und $R_2$ unbhängig voneinander einen $C_1$-$C_6$-Alkylrest und $R_3$ einen $C_1$-$C_6$-Alkylrest oder den Phenylrest bedeuten, als Sexual-Lockstoff zur Bekämpfung oder zur Ueberwachung und Früherkennung von Cydia pomonella.

2. Verwendung nach Anspruch 1, dadurch gekennzeichnet, dass in der Verbindung der Formel I $R_1$ und $R_2$ unabhängig voneinander einen $C_1$-$C_4$-Alkylrest und $R_3$ einen $C_1$-$C_4$-Alkylrest oder den Phenylrest bedeuten.

3. Verwendung nach Anspruch 2, dadurch gekennzeichnet, dass in der Verbindung der Formel I $R_1$, $R_2$ und $R_3$ einen $C_1$-$C_4$-Alkylrest bedeuten.

4. Verwendung nach Anspruch 2, dadurch gekennzeichnet, dass in der Verbindung der Formel I $R_1$ und $R_2$ unabhängig voneinander Methyl, Aethyl, n-Propyl oder n-Butyl; und $R_3$ Methyl, Aethyl, n-Propyl, n-Butyl oder Phenyl bedeuten.

5. Verwendung nach Anspruch 4, dadurch gekennzeichnet, dass in der Verbindung der Formel I $R_1$, $R_2$ und $R_3$ Methyl oder Aethyl bedeuten.

6. Verwendung nach Anspruch 5 von trans, trans-8,10-Dodecadien-1-yloxy-trimethylsilan.

7. Verwendung nach Anspruch 5 von trans, trans-8,10-Dodecadien-1-yloxy-triäthylsilan.

8. Verwendung nach Anspruch 4 von trans, trans-8,10-Dodecadien-1-yloxy-tri-n-propylsilan.

9. Verwendung nach Anspruch 4 von trans, trans-8,10-Dodecadien-1-yloxy-tri-n-butylsilan.

10. Verwendung nach Anspruch 4 von trans, trans-8,10-Dodecadien-1-yloxy-dimethyl-phenylsilan.

11. Trans, trans-8,10-Dodecadien-1-yloxy-silan der Formel I gemäss Anspruch 1, worin $R_1$ und $R_2$ unabhängig voneinander einen $C_1$-$C_6$-Alkylrest; und $R_3$ einen $C_2$-$C_6$-Alkylrest oder den Phenylrest bedeuten.

12. Verbindung nach Anspruch 11 der Formel I, worin $R_1$ und $R_2$ unabhängig voneinander einen $C_1$-$C_4$-Alkylrest; und $R_3$ einen $C_2$-$C_4$-Alkylrest oder den Phenylrest bedeuten.

13. Verbindung nach Anspruch 12 der Formel I, worin $R_1$, $R_2$ und $R_3$ einen $C_2$-$C_4$-Alkylrest bedeuten.

14. Verbindung nach Anspruch 12, der Formel I, worin $R_1$ und $R_2$ Methyl, Aethyl, n-Propyl oder n-Butyl; und $R_3$ Aethyl, n-Propyl, n-Butyl oder Phenyl bedeuten.

15. Trans, trans-8,10-Dodecadien-1-yloxy-triäthylsilan gemäss Anspruch 14.

16. Trans, trans-8,10-Dodecadien-1-yloxy-tri-n-propylsilan gemäss Anspruch 14.

17. Trans, trans-8,10-Dodecadien-1-yloxy-tri-n-butylsilan gemäss Anspruch 14.

18. Trans, trans-8,10-Dodecadien-1-yloxy-dimethyl-phenylsilan gemäss Anspruch 14.

19. Verfahren zur Herstellung einer Verbindung der Formel I gemäss Ansprüche 11 bis 18, dadurch gekennzeichnet, dass man trans, trans-8,10-Dodecadien-1-ol mit einer Verbindung der Formel II

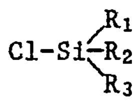 (II)

umsetzt, worin $R_1$, $R_2$ und $R_3$ die unter den Ansprüchen 11 bis 14 angegebenen Bedeutungen haben.

20. Mittel zur Bekämpfung von Cydia pomonella enthaltend eine Verbindung der Formel I gemäss einem der Ansprüche 1 bis 10 zusammen mit geeigneten Trägern, Lösungsmitteln, Verdünnungsmitteln und/oder Formulierungshilfsmittel.

21. Mittel nach Anspruch 20, in Form einer kautschukelastischen oder gummiartigen festen Masse.

22. Mittel nach Anspruch 20 in Form einer sprüh- oder streichfähigen auf Unterlagen haftenden flüssigen oder fliessfähigen Zubereitung.

23. Mittel nach Anspruch 22 mit filmbildenden und/oder aushärtenden Eigenschaften.

24. Mittel nach Anspruch 23 mit filmbildenden elastischen Eigenschaften.

25. Verfahren zur Bekämpfung oder Ueberwachung und Früherkennung von Cydia pomonella, dadurch gekennzeichnet, dass man die gegen den Befall durch Cydia pomonella zu schützende Kulturfläche mit einer Verbindung der Formel I gemäss einem der Ansprüche 1 bis 10 oder einem diese enthaltenden Mittel behandelt, wobei eine als Sexual-Lockstoff ausreichende Menge einer Verbindung der Formel I in die umgebende Atmosphäre abgegeben wird.

26. Verfahren nach Anspruch 25, dadurch gekennzeichnet, dass die verwendete Menge der Verbindung der Formel I 5 bis 100 g, vorzugsweise 10 bis 50 g, pro ha beträgt.

FO 7.5/EIC/jt*/sch*